# NEW EUROPEAN PATENT SPECIFICATION

(11) **EP 0 141 432 B2**
(45) Date of publication and mention of the opposition decision: **05.04.1995**
(45) Mention of the grant of the patent: 12.08.1987
(21) Application number: 84200733.8
(22) Date of filing: 02.03.1982
(51) Int. Cl.: A22C 21/06, A22B 5/18

(54) **Device for separating the gizzard from the connected entrails of slaughtered poultry**
Einrichtung zum Trennen des Magens vom übrigen Eingeweide bei geschlachtetem Geflügel
Dispositif pour détacher les gésiers des entrailles de volaille abattue

(30) Priority: 04.03.1981 NL 8101055
(43) Date of publication of application: 15.05.1985
(62) Divisional of application: 82200254.9
(73) Proprietor: STORK PMT B.V., 5831 AN Boxmeer (NL)
(72) Inventor: Van Mil, Martinus Petrus Gerardus, NL-5831 KS Boxmeer (NL)
(74) Representative: Timmers, Cornelis Herman Johannes

(56) References cited:
- FR-A- 1 541 446
- FR-A- 2 230 296
- FR-A- 2 371 883
- US-A- 3 172 148
- US-A- 3 480 991
- US-A- 3 579 714
- US-A- 4 057 875
- US-A- 4 073 040

## Description

The invention relates to a device as defined in the preamble of claim 1.

Such an arrangement is known from U.S.-A-3 990 128 in the name of applicant. In this known arrangement a third and fourth transport element provided with a helical ribbon terminate the first and second transport elements, and at the point of transition between the two sets of transport elements there is a rotary cutting knife which is positioned transverse to the direction of transport.

By means of this cutting knife the stomach is separated from the gizzard and at the same time the duodenum which terminates at a short distance from the point of attachment of the stomach to the gizzard is cut off.

In connection with the disclosure of this publication it is observed that, although the term "stomach" is erroneously used in part thereof, this publication in fact relates to a device of the same kind as the one which is subject of the present invention.

Since the cutting action of this rotary cutting knife takes place in a horizontal plane, it cannot be avoided that, if the duodenum is to be cut off completely from the gizzard, at the same time a portion of the gizzard is removed, resulting into a loss in product fit for consumption; if on the other hand it is desired to leave the gizzard intact and the knife is so adjusted that this cuts off solely the stomach, a portion of the duodenum remains attached to the gizzard and this has to be removed subsequently in an extra operation.

Furthermore, it has been shown that when, with this known arrangement, the transport speed of the entrails packet is increased, cutting off takes place irregularly and no longer at the correct position.

The invention aims to obviate these drawbacks. and this aim is achieved by the measures as defined in the characterising clause of claim 1.

The entrails packet reaches the separating elements with the gizzard resting on the transport elements and with the remainder of the entrails hanging underneath; during the subsequent movement between the separating elements both the duodenum and the stomach are gripped between the teeth. As the intestines and stomach are pulled downwardly by the intermeshing teeth the egg-shaped gizzard with the entrails packet connected to one end thereof is pulled in a well-defined position in which it "stands on end" so that the separation occurs positively at a well-defined point. The separated gizzard, resting on the separating elements, is moved furtheron. The gizzard can then be fed by means of adjacent transport elements to a known type of cutting knife so that it can be cut open.

Preferably the helical tooth on the separating element connected to the first transport element extends up to near the end of a helical ribbon of this transport device.

Good separation is facilitated by employing teeth on the separating elements with an essentially rectangular cross section.

Efficient guidance of the gizzards over the transport elements is facilitated by two guide rods which are arranged on either side of the tangential plane between the first and second transport element.

U.S.-A-3 990 128 shows the use of a mechanical cleaning device for cleaning the gizzard which has been cut open after separation. In accordance with the invention this is preferably constituted by a double-bevel wheel, the circumference of which supports essentially radial ribs, to be driven rotatingly and having its centre line transverse to the direction of the transport of the gizzards.

US-A-3 480 991 describes a device for removing the liner of a gizzard in which the gizzard, which already has been separated from the entrails packet is transported to skinning rollers by a pair of cylindrical parallel transport elements.

US-A-3 172 148, particularly figures 11-15, describes a device for processing gizzard in which the gizzards together with the stomach is transported by a transporting chain to a pair of parallel separating rollers for separating the gizzard from the stomach.

It is observed that US 4 073 040 discloses a device for removing the entrails (intestines and stomach) from the gizzard in which in a first step the intestines only are separated from the stomach and gizzard by means of a first set of intermeshing gears and thereafter stomach and gizzard are deposited in two cylindrical elements with interengaging helical ribs; the gizzard remains pressed on top of these elements by two overhead transport chains and the stomach is pushed downwardly to below the elements. As the gizzards are gripped by these transport chains directly after they are deposited on the transport elements they cannot change their position during their travel over these elements towards the separating gears so that they arrive there in an undefined position. The helical gears as proposed by the invention grip the entrails and exert a pulling force on them, bringing the gizzard in a position in which it "stands on end" in a positively well-defined position, ensuring a correct removal of intestines and stomach. This known device has a different purpose and is based on a different principle than the device according to the invention which seeks to separate the complete entrails packet in a single step, allowing the gizzard to find its optimum orientation in the separating device such that it stands up on one end, the complete entrails packet hanging below it. The measures according to the invention cannot be derived from this publication.

The invention will now be explained with the aid of the drawings.
Fig. 1 is a top view of an embodiment in accordance with the invention;
Fig. 2 is a side view of this embodiment;
Fig. 3 is a perspective view from the top of the embodiment shown in fig. 1 and 2;
Fig. 4 is a perspective view on enlarged scale of the feed end of this embodiment;
Fig. 5a and 5b illustrate an embodiment of the ribs provided on the transport devices;
Fig. 6a illustrates a further embodiment of the transport devices;
Fig. 6b illustrates a variant thereof;
Fig. 7 illustrates yet a further embodiment of these transport devices;
Fig. 8 shows on an enlarged scale the gizzard separating elements and the cutting knife for cutting open the gizzard.

The device illustrated in the figures comprises a frame 1, shown schematically, in which the various transport and processing elements are mounted. There are two oblong transport and processing elements 2, 3 consisting of several components which will be described in detail later. Element 2 is at the right-hand end (vide the figure) mounted in the support 4, and the shorter element 3 is mounted in the support 5; at the left-hand end both elements are mounted in the support 6 and are driven rotatingly by a gear box 7 which is indicated schematically. The drive is such that the elements rotate with equal angular velocity in mutually opposite directions.

The packets of entrails to be processed by the device are introduced to the feed hopper 8 shown on the left of the figures. Starting from this feed hopper 8 element 2 comprises the following components:

A component 2a provided with a helical ribbon 9 which is designed to transport the entrails packet introduced via the feed hopper 8 to the right. Directly adjacent to this there is a gizzard separating element 2b, to be described in detail in the following, followed by a transport section 2c provided with a helical ribbon 10. The element 3 consists of a first section 3a provided with a series of longitudinal, projecting, ribs 11. A gizzard separating element 3b which is connected with element 3a, is followed by a transport element 3c provided with a helical ribbon 12. The design of these various components will be discussed in detail in the following part.

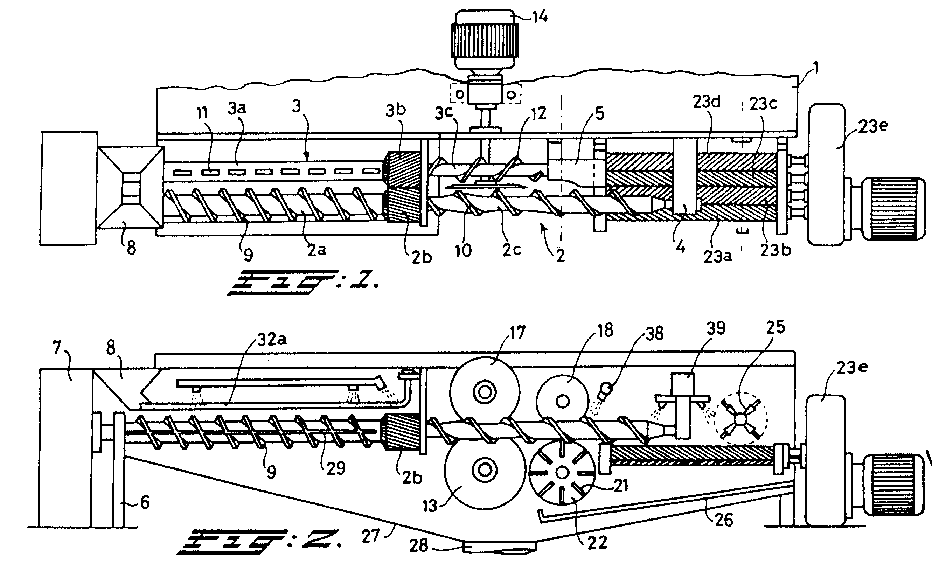

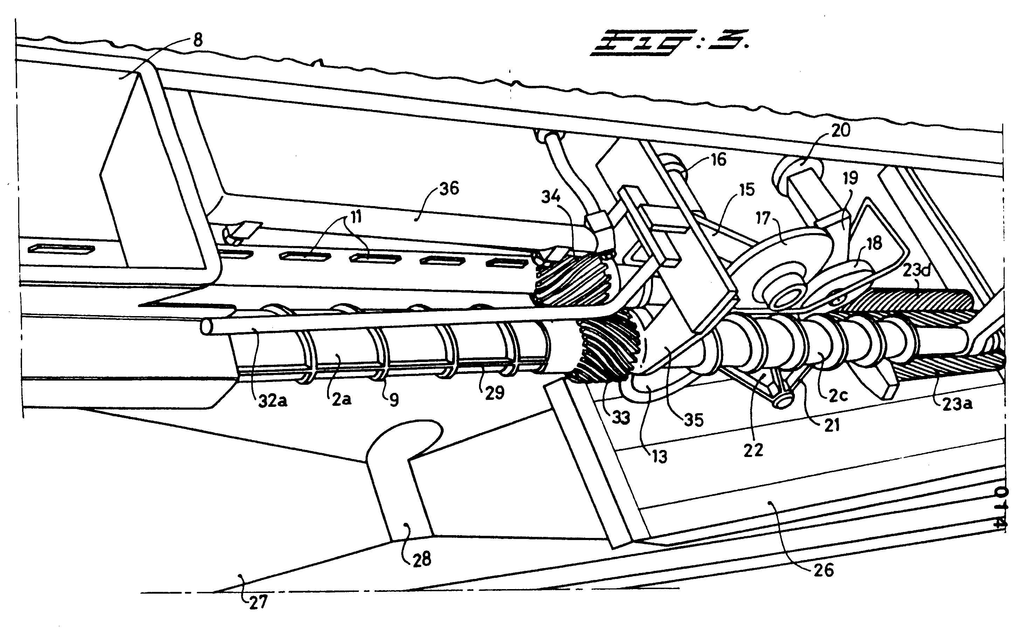

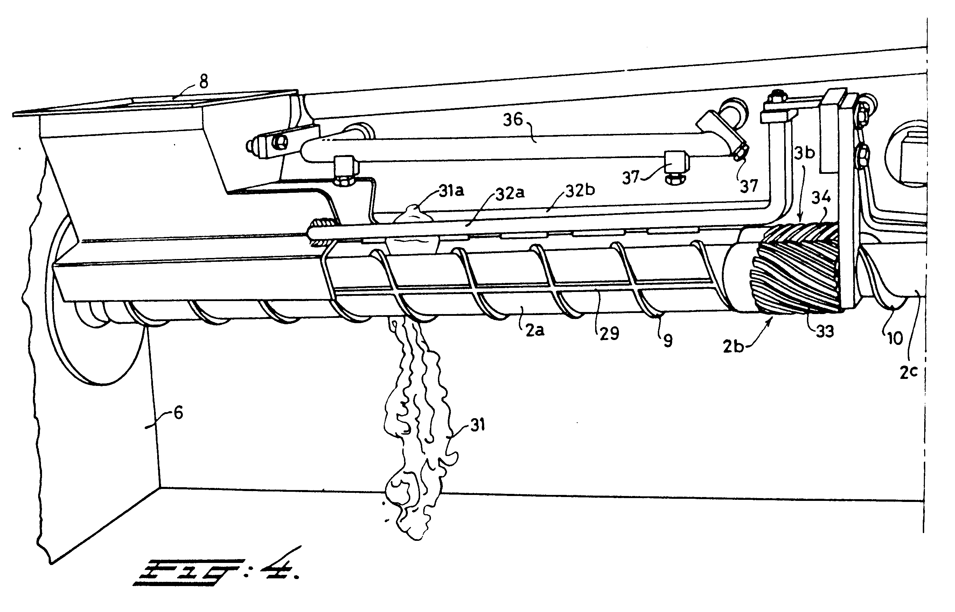

As already known from the U.S. Patent Specification 3,990,128 a cutting knife 13, driven in rotary fashion by the drive motor 14, is placed between the transport elements 2c and 3c. Above this is a guide wheel 17 is installed, supported by the arm 15 which pivots in the bearing 16. These components are followed, in the direction of movement of the gizzard, by a second guide wheel 18, supported by arm 19 (vide fig. 3) and the pivot 20, whilst a double-bevel gizzard cleaning wheel 22, driven rotatingly and provided with radial ribs 21, is arranged underneath element 2c, 3c at the location of this guide wheel 18. Following this there are four peeling rollers 23a-23d, known as such, with the drive 23c, and above them a four-blade ejector 25 which is similarly driven rotatingly.

Underneath the peeling rollers there is a grid 26 and below this a tray 27 with discharge 28.

The various elements in the embodiment illustrated in fig. 1-5 are constructed as follows:

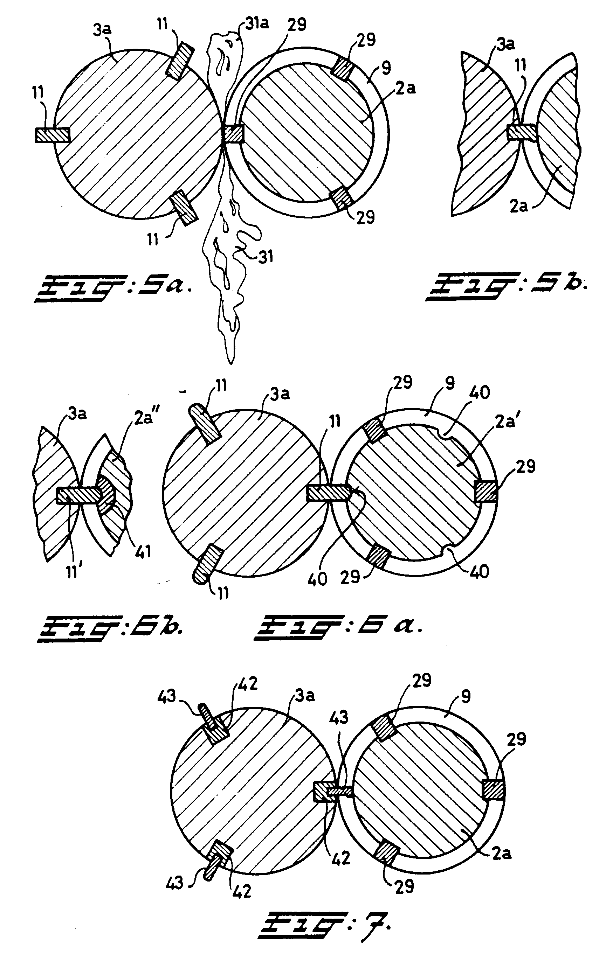

As already stated, the transport element 2a supports the helical ribbon 9 and furthermore supports three longitudinal ribs 29 distributed uniformly around the circumference and projecting a short distance beyond the helical ribbon. The element 3a supports the projecting ribs 11 which fit within the screw threads 9; furthermore three oblong grooves can be formed in the circumference into which fits the portion of the ribs 29 which projects above the ribbon 9. The direction of rotation of the elements is such that a packet of entrails 31, introduced via the hopper 8 is transported from the hopper to the right, i.e. towards the gizzard separating elements 2b, 3b. During this the gizzard 31a rests above the elements 2a and 2b and the remainder of the entrails packet (head, gullet, stomach, liver and entrails) is forced downwardly between transport elements 2a, 2b so that they are hanging there-under. The use of the ribs 11 described above, in combination with the continuous ribs 29 and the grooves 30 ensures that the entrails packet, as shown in fig. 4, is already as a whole under the transport elements 2a, 2b at the beginning thereof, which results into a considerable increase in machine capacity. During operation each space between two adjacent screw thread parts on the right of the feed hopper 8 is filled with an entrails packet.

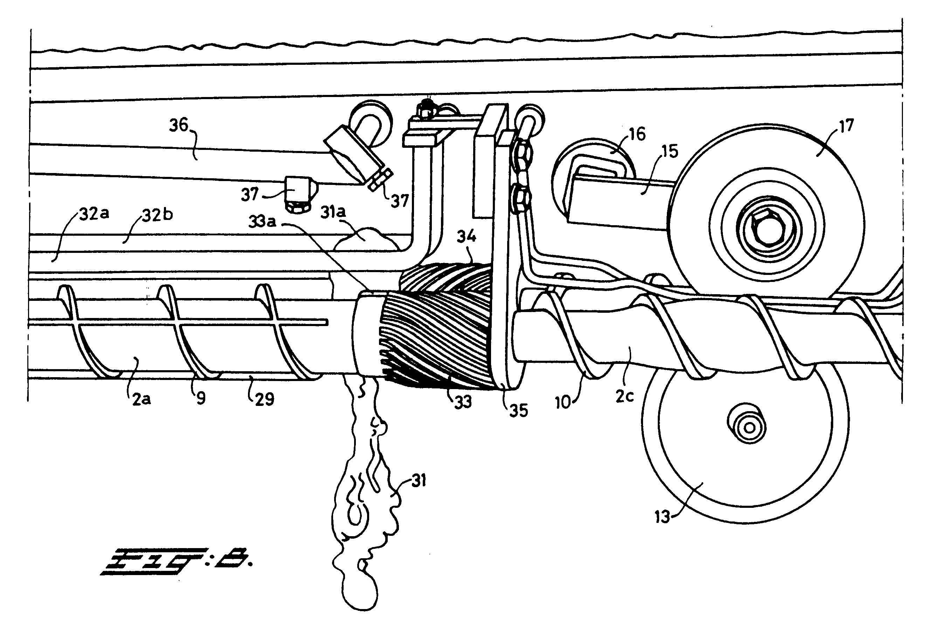

The ribs and surface sections thus interact in such a way that the entrails packet is positively spaced from the gizzard. Fig. 5a illustrates this effect. Fig. 5b shows how the end of a rib 11, resting against the surface of the transport element 2a, can give way elastically.

Fig. 6a shows the transport element 2a' provided with axial grooves 40 into which the ends of the ribs 11 fit.

Fig. 6b shows an embodiment in which the ribs 11' do not need to be made from material which can give way elastically, because the surface of the transport element 2a'' with which they interact is provided with inserts 41 made from elastically-resilient material.

Fig. 7 shows an embodiment in which three supporting strips 42 made for example from plastics are provided in the transport device 3a, with a row of short ribs 43 projecting from each strip, the ends of which interact with the surface of the transport element 2a.

Above the elements 2a, 3a there are two guide rods 32a, 32b which provide an extra guidance to the gizzard 31a.

Each of the gizzard separating elements 2b, 3b is on the outer circumference provided with helical teeth 33 and 34 respectively, having mutually opposite pitch. The helical teeth engage each other; preferably the teeth have a rectangular cross section. The helical teeth 33 has a continuous tooth portion 33a which terminates at the right end of the helical ribbon 9 and functions as a guide during the introduction of an entrails packet between the teeth 33, 34.

When such an entrails packet is introduced between the teeth 33, 34 the gizzard 31a remains supported by the teeth 33, 34 and the remainder of the entrails packet is pinched off therefrom. In practice this pinching off process occurs both at the attachment of the duodenum to the gizzard and at the transition between gizzard and stomach, so that ultimately solely the gizzard with a small part of the entrails, correctly cut off therefrom remains behind on the teeth 33, 34.

After the gizzard separating elements 2b, 3b a double bearing support 35 follows, in which the two elements 2, 3 are supported in individual bearings. These continue into the components 2c, 3c each provided with a helical ribbon 10 and 12 respectively and designed for the further transportation of the separated gizzard towards the rotary cutting knife 13, by means of which the gizzard is cut open lengthwise. During this the gizzard is held by the guide wheel 17 pressing against it.

As shown especially in fig. 1, the teeth 10 on the transport element 2c are longer than the teeth 12 on element 3c. The latter terminates just in front of the gizzard cleaning wheel 22 and the guide wheels 18 positioned thereabove. The interior of the gizzard is cleaned mechanically by the ribs 21, while the gizzard rest on the one side against this wheel 22, and is on the other side pressed by the wheels 18 and guided by transport element 2c. The gizzard then falls onto the peeling rollers 23a-23d on which the gizzard liner is removed in the conventional manner. The ejector 25 throws the gizzards to the right so that they drop out of the machine.

A spray tube 36 with nozzles 37 is placed above the transport elements 2a, 3a. Similar sprayers are provided above the transport device components 2c, 3c (indicated by the reference numeral 38) and above the peeling rollers (indicated by the reference numeral 39).

The separated entrails and the spray water are caught in the hopper-shaped tray 27 and delivered through the discharge arrangement 28. The stomach liner together with the spray water drops from the peeling rollers on to a grid 26 through which the water drains away.

## Claims

1. Device for separating the gizzard from the complete entrails of slaughtered poultry, comprising an inlet (8) for the complete entrails packet, arranged adjacent one of a first and a second elongate and interacting, cylindrical, mutually parallel driven transport element (2, 3) for transporting the complete entrails packet and being spaced from one another, which transport elements synchronously rotate in opposite directions and are provided with a helical rib (9) and with longitudinal interengaging ribs (11, 29) for transporting the complete entrails packet and forcing the entrails packet with the exception of the gizzard under the transport elements and presenting them in this condition to a gizzard separating device, characterized in that the gizzard separating device consists of two cylindrical gizzard separating elements (2b, 3b) coaxially connected with the transport elements (2, 3) and similarly synchronously driven rotatingly, which gizzard separating elements are provided on the circumference with intermeshing helical teeth (33, 34) sized in such a way that the gizzard is supported by these teeth.

2. Device according to claim 1, characterized in that the helical tooth portion on the separating element (2b) connected to the first transport element (2) extends up to near the end of a helical ribbon (9) of this transport device.

3. Device according to claim 1 or 2, characterized in that the cross section of the helical teeth (33, 34) is essentially rectangular.

4. Device according to claims 1-3, characterized by two guide rods (32a, 32b) arranged on either side of the tangential plane between the first and second transport element (2, 3).

5. Device according to claims 1-4, provided with a mechanical gizzard cleaning device, characterized in that this is constituted by a double-bevel wheel (22), the circumference of which supports essentially radial ribs (21), to be driven rotatingly and having its centre line transverse to the direction of transport of the gizzards.

## Patentansprüche

1. Einrichtung zum Trennen des Magens vom übrigen Eingeweide bei geschlachtetem Geflügel umfassend einen Einlaß (8) für das vollständige Eingeweidepaket, welcher im Bereich eines von zwei ersten und zweiten länglichen und zusammenwirkenden, zylindrischen, wechselseitig parallel angetriebenen Transportelementen (2, 3) angeordnet ist, welche einen Abstand zueinander aufweisen und sich synchron in entgegengesetzte Richtungen drehen zum Transportieren des vollständigen Eingeweidepakets, und welche Transportelementen mit einer schraubenförmigen Rippe (9) und mit länglichen ineinandergreifenden Rippen (11, 29) versehen sind, um das vollständige Eingeweidepaket zu transportieren und das Eingeweidepaket mit Ausnahme des Magens unter die Transportelementen zu bringen und das Eingeweidepaket in diesem Zustand einer Magenabtrenneinrichtung anzubieten, dadurch gekennzeichnet, daß die Magenabtrenneinrichtung aus zwei zylindrischen Magentrennelementen (2b, 3b) besteht, welche koaxial mit den Transportelementen (2, 3) verbunden sind und entsprechend synchron drehangetrieben sind, wobei die Magentrennelementen an ihrem Umfang mit ineinandergreifenden, schraubenförmig verlaufenden Zähnen (33, 34) versehen sind, welche so dimensioniert sind, das die Mägen durch diese Zähne getragen werden.

2. Einrichtung nach Anspruch 1, dadurch gekennzeichnet, daß der schraubenförmige Zahn-Abschnitt auf dem Trennelement (2b), welches mit dem ersten Transportelement (2) verbunden ist, sich bis kurz vor das Ende eines schraubenförmigen Bandes (9) dieser Transportvorrichtung erstreckt.

3. Einrichtung nach Anspruch 1 oder 2, dadurch gekennzeichnet, daß der Querschnitt der schraubenförmigen Zähne (33, 34) im wesentlichen rechteckig ist.

4. Einrichtung nach einem der Ansprüche 1 bis 3, dadurch gekennzeichnet, daß zwei Führungsstangen (32a, 32b) auf jeder Seite der Tangentialebene zwischen dem ersten und zweiten Transportelement (2, 3) angeordnet sind.

5. Einrichtung nach einem der Ansprüche 1 bis 4, umfassend eine mechanische Magenreinigungseinrichtung, dadurch gekennzeichnet, daß diese durch ein Doppelkegelrad (22) gebildet ist, dessen Umfang im wesentlichen radial verlaufende Rippen (21) trägt, und welches drehbar angetrieben ist und eine Drehachse quer zur Transportrichtung der Mägen aufweist.

## Revendications

1. Dispositif pour détacher le gésier des entrailles complètes de volailles abattues, comprenant une entrée (8) pour le paquet d'entrailles complet, disposée près d'un bout de premier et second éléments de transport allongés et coopérant l'un avec l'autre, cylindriques, parallèles l'un à l'autre et entraînés (2, 3), qui sont destinés à transporter le paquet complet d'entrailles et qui sont distants l'un de l'autre, ces éléments de transport tournant en synchronisme en sens opposés et qui sont pourvus d'une ailette hélicoïdale (9) et d'ailettes longitudinales qui s'interpénètrent (11, 29) pour transporter le paquet complet d'entrailles et contraindre le paquet d'entrailles, à l'exception du gésier, à passer sous les éléments de transport et pour les présenter dans cet état à un dispositif de séparation du gésier, caractérisé en ce que le dispositif de séparation du gésier consiste en deux éléments cylindriques de séparation de gésier (2b, 3b) qui sont reliés coaxialement aux éléments de transport (2, 3) et, de même, entraînés en rotation synchrone, ces éléments de séparation de gésier étant pourvus sur leur circonférence de dents hélicoïdales (33, 34) qui s'engrènent et qui sont dimensionnées de telle façon que le gésier soit supporté par ces dents.

2. Dispositif selon la revendication 1, caractérisé en ce que la portion de dents hélicoïdales sur l'élément de séparation (2b) relié au premier élément de transport (2) se prolonge presque jusqu'à l'extrémité d'un ruban hélicoïdal (9) de ce dispositif de transport.

3. Dispositif selon la revendication 1 ou 2, caractérisé en ce que la section transversale des dents hélicoïdales (33, 34) est essentiellement rectangulaire.

4. Dispositif selon l'une des revendications 1 à 3, caractérisé en ce qu'il comporte deux tiges guides (32a, 32b) disposées de chaque côté du plan tangentiel entre les premier et second éléments de transport (2, 3).

5. Dispositif selon l'une des revendications 1 à 4, pourvu d'un dispositif mécanique de nettoyage de gésiers, caractérisé en ce que celui-ci est constitué par une roue doublement conique (22), dont la circonférence supporte des ailettes essentiellement radiales (21), qui est entraînée en rotation et dont l'axe est transversal à la direction de transport des gésiers.
